# EUROPÄISCHE PATENTANMELDUNG

(11) **EP 2 614 976 A1**
(43) Veröffentlichungstag der Anmeldung: **17.07.2013**
(21) Anmeldenummer: 13151533.0
(22) Anmeldetag: 16.01.2013
(51) Int. Cl.: B60J 7/22

(54) **Windschotteinrichtung für ein Cabriolet-Fahrzeug**

(30) Priorität: 16.01.2012 DE 102012100338
(71) Anmelder: iKON Fahrzeug Design und Engineering GbR, 85092 Kösching (DE); FKT GmbH, 85104 Pförring (DE)
(72) Erfinder: Körber, Stefan, 85092 Kösching (DE); Matschat, Dietmar, 85117 Eitensheim (DE); Günthner, Guido, 85104 Pförring/Lobsing (DE)
(74) Vertreter: Schlief, Thomas P.

(57) **Zusammenfassung**

Die Erfindung betrifft eine Windschotteinrichtung (1) für ein Cabriolet, vorzugsweise zur Montage zwischen zwei benachbarten Kopfstützen oder Überrollbügeln (20), mit einem Rahmen (2), in dem eine Flachmaterialbahn (3) eingespannt ist, wobei der Rahmen (2) mindestens einen U-förmigen ersten Teilrahmen (4) und einen U-förmigen zweiten Teilrahmen (12) aufweist, die an ihren freien Enden über eine Klappachse (11) verbunden sind, um welche der erste und der zweite Teilrahmen (4, 12) relativ zueinander verschwenkbar sind, und mit Fixierelementen (8, 16, 18) an dem Rahmen (2), die mit Aufnahmen (22-24) am Fahrzeug zusammenwirken, um die Windschotteinrichtung (1) im Fahrzeug reversibel lösbar zu fixieren. Die erfindungsgemäße Windschotteinrichtung (1) zeichnet sich gemäß einem ersten Erfindungsaspekt dadurch aus, dass der erste Teilrahmen (4) um die besagte Klappachse (11) schwenkbar ausgebildet ist, während der zweite Teilrahmen (12) durch zumindest ein Fixierelement (8, 16, 18) im Fahrzeug fixiert verbleibt, vorzugsweise in seiner Einbauposition im Fahrzeug fixiert verbleibt. Gemäß einem zweiten Erfindungsaspekt ragen die Fixierelemente (8, 16, 18) an den Rahmen-Längsabschnitten (7, 15), die sich bei eingebauter Windschotteinrichtung (1) in Fahrzeugquerrichtung (y-Richtung) gegenüberliegen, nach außen und sind mit den Aufnahmen (22-24) reversibel lösbar koppelbar, wobei der aufgeklappte und im Fahrzeug eingebaute Rahmen (2) erst durch die Lagerung in den Aufnahmen (22-24) eine Steifigkeit erhält, die im üblichen Fahrbetrieb des Fahrzeugs dem Fahrtwind standzuhalten vermag.

## Beschreibung

Aus der DE 10 2007 016 152 A ist eine Windschotteinrichtung für ein Cabriolet nach dem Oberbegriff des Anspruchs 1 bekannt. Diese Einrichtung weist lediglich einen einzelnen Rahmen auf, nämlich einen Windschottrahmen, der zweigeteilt ausgebildet ist. Ein U-förmiger erster Teilrahmen dient bei eingebauter Windschotteinrichtung als Oberrahmen, während ein U-förmiger zweiter Teilrahmen als Unterrahmen ausgebildet ist. Beide Teilrahmen sind an ihren freien Enden über eine Klappachse miteinander verbunden. Die Klappachse wird beispielsweise durch Filmscharniere gebildet, die vorzugsweise aus schmalen Nylonbändern bestehen. Zudem sind miteinander korrespondierende Rastelemente im Bereich der jeweiligen freien Enden der beiden Teilrahmen vorgesehen, die beim Aufklappen des Windschottrahmens ineinander einrasten, so dass der erste und der zweite Teilrahmen in einer Ebene liegen und dem Rahmen die notwendige Steifigkeit verliehen wird. In diesem verrasteten Zustand wird der Windschottrahmen in entsprechend ausgebildete Schienen, die beispielsweise an einer Verkleidung der einzelnen Sitzen zugeordneten Überrollbügel vorgesehen sind, von oben eingeschuht.

Diese bekannte Konstruktion hat sich als leicht handhabbar und gut verstaubar erwiesen. Dennoch besteht Optimierungspotential insbesondere hinsichtlich seines Gewichts bzw. der etwas groben Optik und/oder - im Falle einer Windschotteinrichtung zwischen zwei benachbarten Kopfstützen - oder Überrollbügeln der Erreichbarkeit des Cabrioverdecks in dessen abgelegtem Zustand.

Es ist daher die Aufgabe der vorliegenden Erfindung, die bekannte Windschotteinrichtung hinsichtlich der oben genannten Nachteile zu verbessern.

Diese Aufgabe wird durch die Merkmale der unabhängigen Ansprüche gelöst.

Die Vorteile der Erfindung gemäß dem ersten, im Anspruch 1 formulierten Aspekt liegen insbesondere darin, dass ein Teil der Windschotteinrichtung im Fahrzeug fest (aber lösbar) eingebaut bleiben kann, während ein anderer Teil abklappbar ist. Dies erhöht die Einsatzvariabilität der erfindungsgemäßen Windschotteinrichtung erheblich. Wenn dieses beispielsweise zum Einbau zwischen zwei Überrollbügeln oder zwei Kopfstützen vorgesehen ist, kann der auf einem Vordersitz sitzende Bediener den oberen Teilrahmen abklappen und dann ohne größere Anstrengung nach hinten das abgelegte Cabrioverdeck ergreifen, um es nach oben zu ziehen und zu verriegeln. Beispielsweise bei aufziehendem schlechten Wetter kann die Windschotteinrichtung also an Ort und Stelle in seiner aufrechten Einbauposition verbleiben, ohne dass ein Ausbauen und Verstauen der Einrichtung notwendig wäre, um das Verdeck in seine Geschlossenposition zu bringen. Auch lässt sich mittels der Erfindung die durch den Fahrtwind erzeugte Zugluft sehr gut regulieren. Bei eingebauter, ganz aufgeklappter Windschotteinrichtung gelangt kaum Zugluft zu den vorderen Fahrzeugplätzen, was insbesondere bei schnellen Fahrten gewünscht ist. Bei Abklappung des oberen Teilrahmens an den unteren Teilrahmen, der eingebaut bleibt, erreicht mehr Zugluft die Personen auf den Vordersitzen, was bei mittleren Geschwindigkeiten erwünscht sein kann. Die erfindungsgemäße Windschotteinrichtung kann es ebenfalls erlauben, zwar noch im Fahrzeug eingebaut zu bleiben, aber aus der aufrechten Einbauposition abgeklappt zu werden, beispielsweise um 90° oder bis 180° gegenüber der aufrechten Stellung. Dies kann beispielsweise bei Stadtfahrten angenehm sein. Der Bediener kann dann mit einem schnellen Handgriff die Windschotteinrichtung ganz abklappen, braucht also nicht aufwendig die Windschotteinrichtung aus den Aufnahmen herauszunehmen, um sie dann zu verstauen.

Die Vorteile gemäß dem im Anspruch 2 formulierten zweiten Erfindungsaspekt sind insbesondere darin zu sehen, dass zumindest ein wesentlicher Teil der Fixierung der mindestens zwei Teilrahmen relativ zueinander nicht mehr durch eine mittels Verrastung o.ä. erhaltene Eigensteifigkeit erreicht wird, sondern durch eine Verlagerung dieser Fixieraufgabe in Teile des Fahrzeugs selbst. Es ist also nicht mehr notwendig, Rastelemente o.ä. im Rahmen selbst vorzusehen. Die im Fahrbetrieb verlangte Steifigkeit wird erst durch den Einbau der Windschotteinrichtung im Fahrzeug erhalten.

Die beiden Erfindungsaspekte ergänzen sich, denn durch die Verlagerung eines Großteils der Fixierung der beiden Teilrahmen relativ zueinander aus dem Windschottrahmen in fest im Fahrzeug montierte Teile kann einerseits der Rahmen wesentlich schmaler und die Windschotteinrichtung wesentlich leichter ausgeführt werden, andererseits kann der erste Teilrahmen vom zweiten Teilrahmen weggeschwenkt werden, ohne dass große Kräfte aufgewendet werden müssten.

Die Erfindung kann auch bei Windschotteinrichtungen eingesetzt werden, die sowohl einen Windschottrahmen als auch einen Abdeckungsrahmen aufweisen. Solche Einrichtungen sind beispielsweise aus der DE 10 2004 061 758 A1 bekannt. Hierbei kann die erfindungsgemäße Windschotteinrichtung in dem horizontal verbauten Abdeckungsrahmen mit zwei zueinander verschwenkbaren Teilrahmen vorgesehen sein, wobei der erste Teilrahmen um die Filmscharniere nach oben schwenkbar ist, um einen leichten Zugriff auf die hinteren Sitze bzw. dort abgelegte Gegenstände zu haben. Der zweite Teilrahmen verbleibt in seiner Einbauposition. Es muss in diesem Fall nicht der gesamte Abdeckungsrahmen angehoben werden, sondern lediglich - aber vollständig - der erste Teilrahmen.

Im Folgenden wird das Hauptaugenmerk auf den Fall gelegt, bei dem der Rahmen als zwischen zwei Kopfstützen oder Überrollbügeln einbaubarer Windschottrahmen ausgebildet ist.

Vorteilhafterweise sind die Fixierelemente an den Teilrahmen als Stifte ausgebildet, die von den Längsabschnitten des Rahmens nach außen ragen. Die Längsabschnitte verlaufen bei im Wesentlichen senkrecht zwischen zwei einzelnen Sitzen zugeordneten Überrollbügeln oder Kopfstützen in z-Richtung des Fahrzeugs, so dass die Erhebungen in y-Richtung weisen. Bevorzugt sind sich die Fixierelemente diametral gegenüber, d.h. auf gleicher Höhe, angeordnet. Die entsprechend ausgebildeten, im Fahrzeug vorgesehen korrespondierenden Fixierelemente sind als Aufnahmen in Form von Einbuchtungen oder Hinterschneidungen ausgebildet, beispielsweise möglichst wenig sichtbar in verkleideten oder offenen, aber schmalen Anbauteilen an den Überrollbügel oder Kopfstützen. Die Stifte lagern in den Aufnahmen kraftschlüssig und geben sie erst bei entsprechendem Kraftaufwand durch Ziehen oder Drücken frei. Dabei können Fixierelemente sowohl an dem ersten und an dem zweiten Teilrahmen vorgesehen sein, oder es kann lediglich einer der beiden Teilrahmen mit Fixierelementen versehen sein. Im letztgenannten Fall wird der Teilrahmen ohne Fixierelemente dann direkt an dem anderen, mit Fixierelementen versehenen, Teilrahmen fixiert, beispielsweise durch eine Verrastung. Verschiedene entsprechende Möglichkeiten werden weiter unten vorgestellt.

Bei einer vorteilhaften Ausführungsform der Erfindung ist an jedem Längsabschnitt sowohl des ersten als auch des zweiten Teilrahmens mindestens ein Fixierelement angeordnet. Hierbei halten demnach lediglich zwei Fixierelemente den zweiten Teilrahmen fest im Fahrzeug positioniert, während der erste Teilrahmen um die Klappachse verschwenkt wird.

Entsprechend einer bevorzugten Variante sind an den beiden Längsabschnitten des zweiten Teilrahmens mindestens jeweils zwei entlang der Längsabschnitte beabstandete Fixierelemente angeordnet. Die mindestens vier Fixierelemente verbleiben beim Abklappen des ersten Teilrahmens in ihren zugeordneten Aufnahmen. Auf diese Weise kann eine stabilere Lagerung des zweiten Teilrahmens (also der Unterrahmen bei einem zwischen zwei Überrollbügeln bzw. Kopfstützen zu befestigenden Windschott) auch bei Ergreifen an verschiedensten Stellen des ersten Teilrahmens (entsprechend dem Oberrahmen) gewährleistet werden.

Gemäß einer weiteren vorteilhaften Ausführungsform weist die erfindungsgemäße Windschotteinrichtung zur lösbaren Befestigung im Fahrzeug alternativ oder zusätzlich mindestens ein Fixierelement in einem Eckabschnitt (vorzugsweise beiden Eckabschnitten) oder an dem Querabschnitt des zweiten Teilrahmens auf. Vorzugsweise ragt dieser mindestens eine Abschnitt, beispielsweise in Form einer oder mehrerer Zungen, im eingebauten Zustand im Wesentlichen vertikal nach unten, um mit mindestens einer Aufnahme in dem Fahrzeug zusammen zu wirken. Diese mindestens eine Aufnahme ist beispielsweise schlitzartig in der Fahrzeugverkleidung zwischen den beiden Sitzen oder Überrollbügeln angeordnet.

Besonders bevorzugt übernehmen die Fixierelemente und die Aufnahmen im Zusammenspiel die komplette Versteifung der beiden Teilrahmen zueinander. Mit anderen Worten sind bevorzugt in den Teilrahmen keinerlei Rastelemente oder andere Einrichtungen zum Fixieren der beiden Teilrahmen gegeneinander vorhanden. Im ausgebauten Zustand sind die beiden Teilrahmen demnach nur über die Schwenkscharniere, insbesondere Filmscharniere (ggf. einschließlich weiterer nicht miteinander koppelbarer Folien, Stoffe o.ä.), bzw. sogar nur über die in den beiden Teilrahmen eingespannte Flachmaterialbahn miteinander gekoppelt. Hierdurch können die Längsabschnitte wesentlich schmaler und leichter ausgeführt werden als bei den bekannten Rahmen. Nicht nur ergibt sich daraus eine schönere Optik, auch ist die Handhabung wegen des geringeren Gewichts der Windschotteinrichtung erleichtert.

Eine alternative vorteilhafte Ausführungsform einer erfindungsgemäßen Windschotteinrichtung entsprechend dem ersten (aber nicht dem zweiten) Erfindungsaspekt zeichnet sich dadurch aus, dass die beiden aneinander an- oder gegenüberliegenden freien Enden der beiden Teilrahmen zueinander fixierbar, insbesondere miteinander verrastbar, sind. Hierbei können herkömmliche Verrastungsmittel vorgesehen sein, beispielsweise federbelastete Rastnasen an den freien Enden des einen Teilrahmens, die in Hinterscheidungen an dem entsprechend zugewandten Ende des anderen Teilrahmens einrasten. Andere Rast- oder sonstige lösbare Verbindungsmöglichkeiten sind dem Fachmann vielfach geläufig. Diese Ausführungsform erlaubt die Abklappung des ersten Teilrahmens bei eingebautem aufrechtem zweiten Teilrahmen, ist also vergleichbar mit der Abklappung der Windschotteinrichtung ohne Verrastmöglichkeit.

Die genannte Ausführungsform benötigt keine Fixierelemente am ersten Teilrahmen, da die Verrastung dem Rahmen der Windschotteinrichtung auch während der Fahrt genügend Steifigkeit und Stabilität verleiht. Somit müssen auch keine entsprechenden Aufnahmen in den Überrollbügeln bzw. Kopfstützen für die weggefallenen Fixierelemente vorgesehen sein. Ebenfalls denkbar ist es, lediglich den ersten Teilrahmen mit Fixierelementen zu versehen und den zweiten Teilrahmen dann gegen den im Fahrzeug fixierten, ersten Teilrahmen zu verschwenken.

Bei beiden Erfindungsaspekten ist es des weiteren bevorzugt, dass der erste Teilrahmen (Oberrahmen) beim Abklappen an den zweiten Teilrahmen (Unterrahmen) in eine Arretierstellung überführt wird, vorzugsweise durch Verrastung korrespondierend zueinander ausgebildeter Rastelemente an dem ersten und dem zweiten Teilrahmen. Alternativ können auch Rastelemente an dem ersten Teilrahmen und damit korrespondierende Rastelemente an den Aufnahmen oder allgemein Teilen des Fahrzeugs, einschließlich der Überrollbügel bzw. der Kopfstützen oder Teilen der Fahrzeugverkleidung, vorgesehen sein.

Bei einem zwischen zwei Kopfstützen platzierbaren Windschottrahmen ist es vorteilhaft, eine y-Zentrierung des Rahmens vorzusehen, da nicht gewährleistet werden kann, dass die beiden benachbarten Sitze in einem Cabriolet sich stets auf gleiche Höhe in x-Richtung (Fahrzeuglängsrichtung) befinden.

Zu diesem Zweck sieht eine vorteilhafte Weiterbildung der Erfindung vor, dass mindestens eines der Fixierelemente, vorzugsweise mindestens eines der untersten Fixierelemente, in y-Richtung (Fahrzeugquerrichtung) federbelastet ausgebildet ist. Wenn die beiden benachbarten Sitze oder Kopfstützen verschiedene x-Positionen einnehmen und/oder wenn die Neigung der Sitze uneinheitlich ist, stellt sich der Windschottrahmen entsprechend schräg zur x-Richtung. Die mindestens eine Feder drückt das Fixierelement so weit heraus, dass eine sichere Lagerung in den Aufnahmen gewährleistet ist. Auch wird durch den Federmechanismus ein Ausgleich hinsichtlich Fertigungs- und/oder Montagetoleranzen und/oder Temperatureinwirkungen geschaffen. Diese Vorteile sind auch bei der Anordnung der erfindungsgemäßen Windschotteinrichtung zwischen zwei ortsfesten Überrollbügeln gegeben.

Die besagte mindestens eine Feder ist vorzugsweise im Querabschnitt des zweiten Teilrahmens bzw. des Unterrahmens angeordnet, um deren räumliche Ausdehnung in y-Richtung Rechnung zu tragen. Das der Feder zugeordnete Fixierelement ragt dann im Eckbereich von Längs- und Querabschnitt im Wesentlichen in y-Richtung aus dem zweiten Teilrahmen. Vorzugsweise sind für jede der beiden untersten, sich gegenüberliegenden Fixierelemente entsprechende Federn im Querabschnitt vorgesehen.

Die Erfindung betrifft des weiteren eine Vorrichtung, die in einem Überrollbügel, einer Kopfstütze o.ä. eines Cabriolets integriert oder daran angebaut ist oder für einen Überrollbügel, eine Kopfstütze o.ä. vorgesehen ist, hierbei insbesondere eine Verkleidung oder ein Anbauteil für einen Überrollbügel, eine Kopfstütze o.ä. Die erfindungsgemäße Vorrichtung weist wenigstens eine der schon oben diskutierten Aufnahmen auf, welche zur Aufnahme der besagten Fixierelemente an den Teilrahmen ausgebildet sind. Dabei kann lediglich eine einzige, insbesondere langgestreckte Aufnahme pro Überrollbügel, Kopfstütze o.ä. an der Vorrichtung vorgesehen sein, die mit einem ebenfalls langgestreckten Fixierelement der Windschotteinrichtung zusammenwirkt.

Im Falle einer zwischen zwei benachbarten Fahrzeugsitzen zu platzierenden Windschotteinrichtung sind jedoch vorzugsweise mehrere, besonders bevorzugt drei, Aufnahmen pro Überrollbügel, Kopfstütze o.a. im Wesentlichen übereinander angeordnet.

Weiter bevorzugt umfassen die jeweils untersten, sich in y-Richtung gegenüberliegenden Aufnahmen schräg nach unten in x- und z-Richtung verlaufende Einschuhnuten. Die jeweils darüber angeordneten Aufnahmen sind vorzugsweise als im Wesentlichen horizontal verlaufende Öffnungen ausgebildet. Bei dieser Ausgestaltung werden die untersten Fixierelemente des Windschottrahmens schräg von oben in die besagten Einschuhnuten eingeführt. Anschließend wird der Rahmen nach oben verschwenkt, bis alle anderen Fixierelemente in ihren jeweiligen Aufnahmen eingeführt sind.

Sind an jeder Längsseite des Rahmens drei Fixierelemente vorgesehen, verläuft die Klappachse des Rahmens vorzugsweise zwischen den beiden in y-Richtung beabstandeten mittleren und den beiden entsprechend oberen Fixierelementen. Bei dieser Konstruktion kann der Rahmen sowohl im ab- als auch im aufgeklappten Zustand ebenfalls um die untersten Fixierelemente verschwenkt werden. Dies bedeutet auch, dass die Montage der erfindungsgemäßen Windschotteinrichtung in das Fahrzeug sowohl im abgeklappten als auch im nicht abgeklappten Zustand möglich ist. Unabhängig vom Klappzustand kommt es lediglich darauf an, dass zuerst die untersten Fixierelemente in die untersten Aufnahmen eingeschuht werden.

Wenn der Rahmen abgeklappt ist (d.h. der Oberrahmen ist nach unten geschwenkt), werden durch Verschwenken des abgeklappten Rahmens die beiden mittleren Fixierelemente in die zugehörigen Aufnahmen eingeführt. Anschließend wird der Oberrahmen hochgeschwenkt, wobei dessen oberste Fixierelemente in die obersten Aufnahmen eingeführt werden.

Besonders bevorzugt sind die Fixierelemente des ersten Teilrahmens (bzw. des Oberrahmens) mit weniger Kraft aus ihren Aufnahmen zieh- oder drückbar als die obersten Fixierelemente des zweiten Teilrahmens (bzw. des Unterrahmens) aus deren Aufnahmen. Dies bedeutet, dass der erste Teilrahmen verschwenkt werden kann, ohne dass befürchtet werden muss, dass auch der zweite Teilrahmen ungewollt mitschwenkt. Dies ist besonders dann von Nutzen, wenn der Bediener auf das abgelegte Verdeck zugreifen will, ohne hierbei den Windschottrahmen auszubauen oder sowohl den Unter- als auch den Oberrahmen zu verschwenken, was beim anschließenden Hochschwenken unhandlich wäre.

Es ist weiterhin zweckmäßig, wenn zumindest einige der Aufnahmen federbelastete Gegendruckbolzen aufweisen, um die zugehörigen Fixierelemente des Rahmens durch Federkraft zu fixieren.

Dem Abklappen des ersten Rahmens bzw. Oberrahmens bei fixiert bleibendem zweiten Rahmen bzw. Unterrahmen kommt es zugute, wenn die Rückhaltekraft durch die Federbelastung für die Fixierelemente des Oberrahmens kleiner ist als die Rückhaltekraft durch die Federbelastung für die Fixierelemente des Unterrahmens.

Wenn die erfindungsgemäße Windschotteinrichtung lediglich den ersten Erfindungsaspekt realisiert und der erste Teilrahmen unabhängig vom Einbau ins Fahrzeug mit dem zweiten Teilrahmen fixierbar ist, brauchen lediglich für den zweiten Teilrahmen (Unterrahmen) Aufnahmen vorgesehen sein. Diese können als im Wesentlichen vertikal verlaufende, beispielsweise an den Überrollbügeln vorgesehenen Schienen zum Einschuhen des zweiten Teilrahmens von oben oder - wie bei der vorbeschriebenen Ausführungsform - als Aufnahmen zum seitlichen Einschuhen und dann Hochschwenken entweder des zweiten Teilrahmens (mit anschließendem Verrasten des ersten und des zweiten Teilrahmens) oder der schon vorher ganz aufgeklappten Windschotteinrichtung ausgeführt sein.

Die als Öffnungen ausgebildeten Aufnahmen sind entweder als Sacköffnungen (geschlossen in x-Richtung) oder in x-Richtung durchgehend offen ausgebildet. Sacköffnungen haben den Vorteil, dass ein Gegendruck, beispielsweise durch Fahrtwind oder durch diesen verursachte Verwirbelungen den durch die in den Sachöffnungen gesicherten Teilrahmen nicht herausdrücken können. Die in x-Richtung durchgehenden Öffnungen wiederum haben den Vorteil, dass beispielsweise das Abklappen des Oberrahmens von vorne und von hinten erfolgen kann. Es ist hierbei selbstverständlich darauf zu achten, dass die im Fahrbetrieb wirkenden Kräfte den Oberrahmen nicht aus den Aufnahmen pressen. Dies kann durch von beiden Seiten auf die Fixierelemente wirkende federbelastete Gegendruckbolzen o.ä. realisiert werden.

Weitere vorteilhafte Ausgestaltungen der Erfindung sind durch die Merkmale der Unteransprüche gekennzeichnet.

Im Folgenden wird die Erfindung anhand von Figuren näher erläutert. Es zeigen:
- **Fig. 1**: eine auf- bzw. hochgeklappte Windschotteinrichtung zum Einbau zwischen zwei Überrollbügel in Rückansicht;
- **Fig. 2**: die Windschotteinrichtung der Fig. 1 mit abgenommenen Rückseitenschalen in Rückansicht;
- **Fig. 3**: die Windschotteinrichtung der Fig. 1-2 im eingebauten Zustand in Rückansicht (Sicht auf die Rückseiten der Sitze);
- **Fig. 4**: die eingebaute Windschotteinrichtung der Fig. 3 im abgeklappten Zustand;
- **Fig. 5**: die Windschotteinrichtung aus Fig. 5 in Seitenansicht;
- **Fig. 6**: ein Überrollbügel (mit einer integrierten Kopfstütze) mit einem Anbauteil mit Aufnahmen für Fixierelemente der Windschotteinrichtung der Fig. 1-5.
- **Fig. 7**: die Windschotteinrichtung der Fig. 1-6 mit abgenommenen Rückseitenschalen und (isoliert dargestellten) Gegendruckbolzen der Aufnahmen;
- **Fig. 8**: eine Detailansicht der Fig. 7;
- **Fig. 9**: eine zweite Ausführungsform einer hochgeklappten Windschotteinrichtung (mit in den Überrollbügeln versenkten Aufnahmen) - Sicht auf die Rückseite der Überrollbügel;
- **Fig. 10**: die Ausführungsform gemäß der Fig. 9 in halbabgeklappter Stellung;
- **Fig.11**: die Ausführungsform gemäß der Fig. 9 und 10 in einer ersten abgeklappten Stellung, und
- **Fig. 12**: die Ausführungsform gemäß der Fig. 9-11 in einer zweiten abgeklappten Stellung.

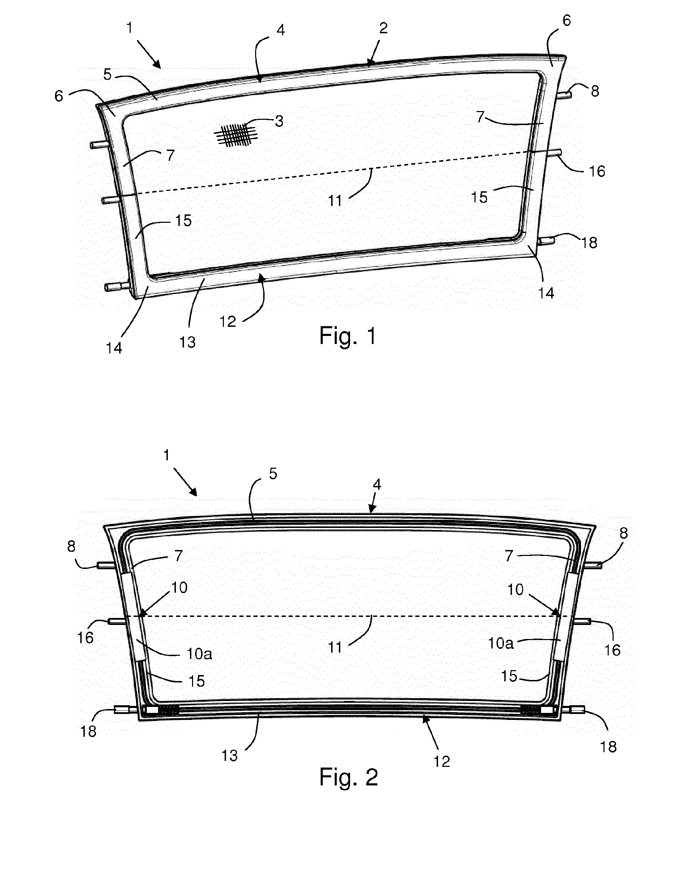

Fig. 1 zeigt eine erfindungsgemäße Windschotteinrichtung 1, die im vorliegenden Ausführungsbeispiel in Vorder- und Rückansicht im Wesentlichen gleich aussieht. Die Windschotteinrichtung 1 umfasst einen umlaufenden Rahmen 2, in dem eine Flachmaterialbahn 3 eingefasst ist (nur in Fig. 1 angedeutet), die beispielsweise als Textilgewirke ausgebildet ist.

Der Rahmen 2 ist unterteilt in einen U-förmigen ersten Teilrahmen 4, der vorliegend als Oberrahmen ausgebildet ist (nachfolgend ebenfalls mit dem Bezugszeichen 4 bezeichnet), und einen ebenfalls U-förmigen zweiten Teilrahmen 12, der vorliegend als Unterrahmen ausgebildet ist (nachfolgend ebenfalls mit dem Bezugszeichen 12 bezeichnet). Beide Teilrahmen 4, 12 umfassen jeweils einen Querabschnitt 5, 13, der jeweils an seinen Enden in je einen Eckabschnitt 6, 14 übergeht, an den sich jeweils ein gegenüber dem jeweiligen Querabschnitt 5 bzw. 13 ungefähr rechtwinklig verlaufender Längsabschnitt 7 bzw. 15 anschließt.

Zu beiden Seiten des Rahmens 2 stehen insgesamt sechs Fixierelemente 8, 16, 18 ab, die vorliegend stiftförmig ausgebildet sind und übereinander angeordnet sind. Diese dienen zur Fixierung der Windschotteinrichtung 1 zwischen zwei Überrollbügeln 20, Kopfstützen o.ä. eines Cabriolets, wie dies weiter unten genauer beschrieben wird.

Wie aus der Figur 2 ersichtlich, sind die freien Enden zweier aufeinanderstoßender Längsabschnitte 7, 15 mittels Klappscharnieren 10 verbunden, die vorliegend als Filmscharniere ausgebildet sind. Die Filmscharniere umfassen vorliegend bevorzugt sehr flexible, aber stabile Nylonbänder 10a. Auf diese Weise lassen sich Ober- und Unterrahmen 4, 12 zueinander um eine - im Einsatz - horizontal verlaufende Klappachse 11 verschwenken, um die Windschotteinrichtung 1 auf oder zu zu klappen. Die Klappscharniere 10 sind die einzigen Verbindungsmittel zwischen den beiden Teilrahmen 4, 12 und definieren in diesem Fall die Klappachse 11. Nach einer nicht dargestellten Ausführungsform können die beiden Teilrahmen 4, 12 jedoch auch ohne Klappscharniere 10 lediglich durch die Flachmaterialbahn 3 miteinander verbunden sein. Die Lage der Klappachse 11 wird in diesem Fall lediglich durch die jeweils freien Enden der aufeinanderstoßenden Längsabschnitte 7, 15 definiert . Es sind keine weiteren Arretierungsmittel vorhanden, welche die Windschotteinrichtung 1 im aufgeklappten Zustand belassen würden, wenn diese aus der Fixierung im Fahrzeug entnommen ist. Mit anderen Worten klappen die beiden Teilrahmen 4, 12 ohne Kraftrückhalt aufeinander zu; die beiden Teilrahmen 4, 12 sind also über die Nylonbänder 10a nur lose miteinander verbunden.

Wie oben angesprochen, sind sechs stiftförmige Fixierelemente 8, 16, 18 an den beiden Teilrahmen 4, 12 angeordnet. Genauer sind am Oberrahmen 4 zwei sich diametral an den beiden Längsabschnitten 7 auf gleicher Höhe gegenüberliegende Fixierelemente 8 vorgesehen, während am Unterrahmen 12 an jedem der beiden Längsabschnitte 15 jeweils zwei, übereinander liegende Fixierelemente 16, 18 angeordnet sind. Die besagte Klappachse 11 verläuft zwischen den Fixierelementen 6 des Oberrahmens 4 und knapp oberhalb der oberen Fixierelemente 16 des Unterrahmens 12.

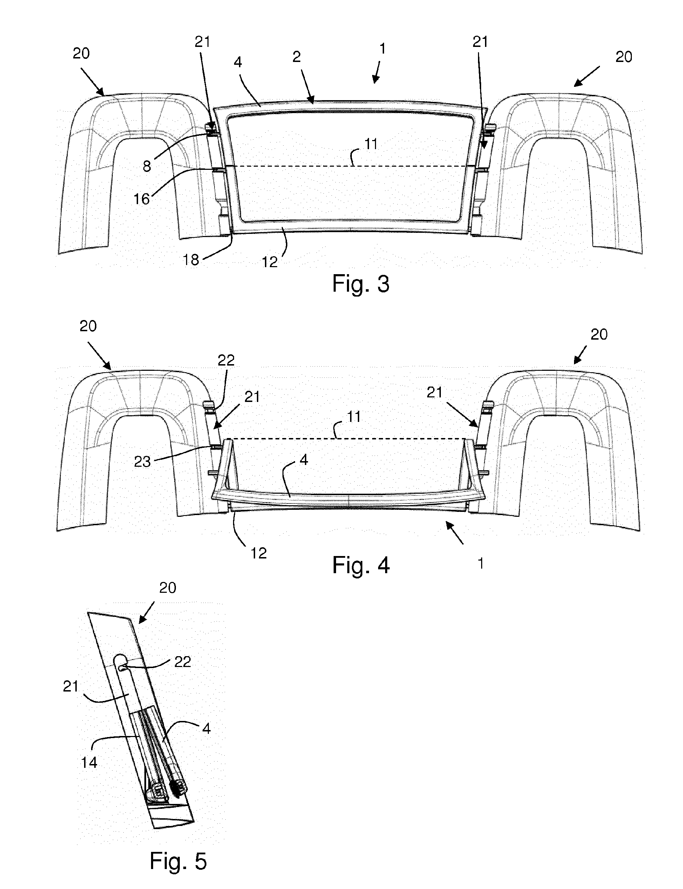

Die zwischen zwei Überrollbügeln 20 eingehängte Windschotteinrichtung 1 ist in Fig. 3 im aufgeklappten und in den Fig. 4 und 5 (Seitenansicht) im abgeklappten Zustand dargestellt. Hierzu ist auf zueinander weisenden Seitenflanken der beiden Überrollbügel 20 je eine als Anbauteil 21 ausgebildete Halterung aus vorzugsweise Kunststoff vorgesehen. In jedem Anbauteil 21, das beispielsweise an den zugehörigen Überrollbügel 20 angeschraubt ist, sind Aufnahmen 22, 23, 24 vorgesehen, in welche die Fixierelemente 8, 16, 18 eingeführt werden können. Zu diesem Zweck sind die Aufnahmen 22, 23, 24 auf den zueinander gerichteten Seiten geöffnet und enden sackartig, damit die Fixierelemente 8, 16, 18 nicht in x-Richtung durchrutschen.

Die unteren Aufnahmen 24 sind vorliegend als Einschuhnuten ausgebildet, die schräg nach unten, also in x- und z-Richtung, verlaufen. Somit können die unteren Fixierelemente 18 des Unterrahmens 12 von oben in die Einschuhnuten eingeführt werden.

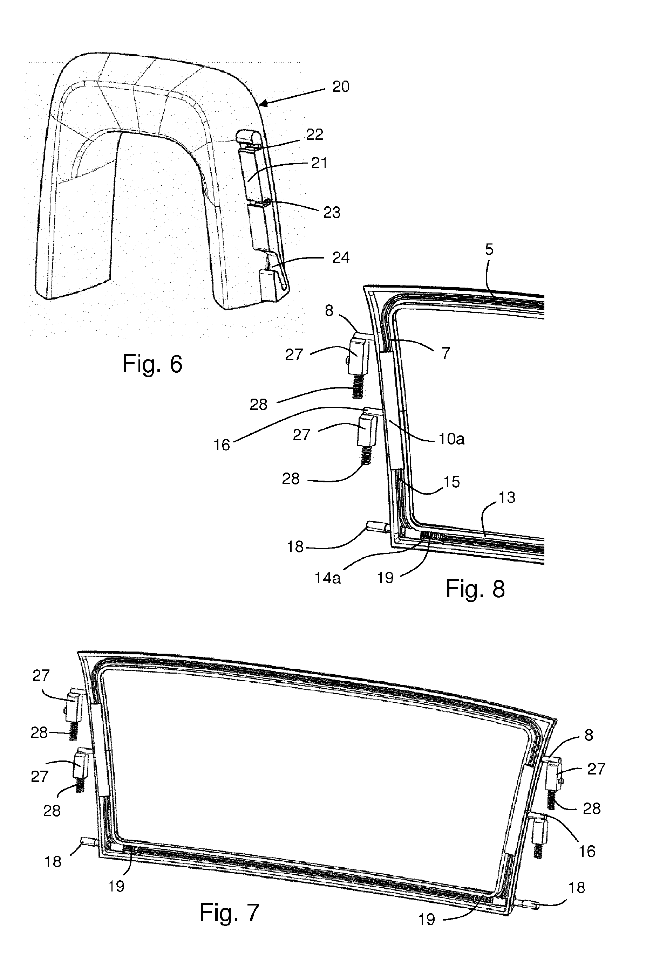

Die oberen Aufnahmen 22 und die mittleren Aufnahmen 23 sind hingegen im Wesentlichen in x-Richtung als horizontale Öffnungen ausgeführt. Wie insbesondere den Figuren 7 und 8 zu entnehmen ist, ragen in die Aufnahmen 22 und 23 von unten Gegendruckbolzen 27, welche in den Halterungen bzw. Anbauteilen 21 lagern (nicht dargestellt) und die eingeführten Fixierelemente 8 bzw. 16 der Teilrahmen 4, 12 mit Hilfe der Kraft jeweils einer Feder 28 nach oben drücken. Durch die Federkräfte werden die Fixierelemente 8, 16 in den Aufnahmen 22, 23 gehalten.

Die beschriebenen Aufnahmen 22-24 ermöglichen es, dass die Windschotteinrichtung 1 mit den unteren Fixierelementen 18 in die unteren Aufnahmen 24 (Einschuhnuten) von schräg oben eingeführt werden kann, um dann den Unterrahmen 12 - mit oder ohne heraufgeklapptem Oberrahmen 4 - nach oben zu verschwenken. Hierbei rasten dann die mittleren Fixierelemente 16 nach Überwinden der von den Federn 28 ausgeübten Federkraft in die mittleren Aufnahmen 23 ein. Wenn der Oberrahmen 4 abgeklappt ist, kann dieser dann um die Klappachse 11 hochgeschwenkt werden, bis ihre Fixierelemente 8 in die oberen Aufnahmen 22 einrasten. Wenn der Oberrahmen 12 schon vor Verrasten der mittleren Fixierelemente 16 in den Aufnahmen 23 hochgeklappt war, wird der aufgeklappte Rahmen 2 insgesamt um die unteren Fixierelemente 18 hochgeschwenkt, wobei die mittleren und die oberen Fixierelemente 16, 8 gleichzeitig in die Aufnahmen 23 bzw. 22 einrasten.

Des weiteren ist die von den Federn 28 in den Aufnahmen 22 ausgeübte Rückhaltekraft auf die Fixierelemente 8 des Oberrahmens 4 kleiner als die entsprechende, von den Federn 28 in den Aufnahmen 23 ausgeübte Rückhaltekraft auf die Fixierelemente 16 des Unterrahmens 12. Damit kann der Oberrahmen 4 mit geringerer Kraft aus seinen Aufnahmen 22 gezogen bzw. gedrückt werden. Wenn vom Bediener gewünscht, kann dann der Oberrahmen 4 auf den Unterrahmen 12 geschwenkt werden, wobei dieser in seiner Position zwischen den Überrollbügeln 20 verbleiben kann. Der gleiche Effekt ist erzielbar, wenn der Oberrahmen 4 mit einer Hand verschwenkt wird, während die andere Hand den Unterrahmen 12 in seiner Lage zurückhält.

In den Fig. 4 und 5 ist dargestellt, wie bei heruntergeklapptem Oberrahmen 4 die Durchgriffsfläche zwischen den beiden Überrollbügeln 20 oberhalb der Windschotteinrichtung vergrößert ist, um auf hintere Bereiche des Fahrzeugs (zum Betrachter hin gerichtet) zugreifen zu können, beispielsweise auf das abgelegte Verdeck, um dieses schließen zu können. Nach einer nicht dargestellten Variante ist es auch möglich, den Oberrahmen 4 im Fahrzeug zu befestigen und dann den Unterrahmen 12 nach oben hin auf den Oberrahmen 4 zu klappen, um auf hintere Bereiche des Fahrzeugs zugreifen zu können.

Die erfindungsgemäße Windschotteinrichtung 1 weist des weiteren eine Einrichtung zur y-Zentrierung und zum Toleranzausgleich in Fahrzeugquerrichtung (y-Richtung) auf, um in x-Richtung verschieden weit nach vorne bzw. hinten verschobenen oder geneigten Sitzen bzw. Überrollbügeln 20 Rechnung zu tragen. Damit in diesen Fällen die Windschotteinrichtung 1 trotzdem sicher in den Anbauteilen 21 bzw. Halterungen gehalten wird, sind vorliegend die Fixierelemente 18 jeweils nach außen in y-Richtung federbelastet ausgebildet. Die Federn 19 lagern hierbei in Horizontalrichtung in Hohlräumen 14a der Eckabschnitte 14 und drücken die Fixierelemente 18 nach außen, so dass auch bei in x-Richtung verschobenen Überrollbügeln 20 eine sichere Lagerung des Rahmens 2 gewährleistet ist. Gemäß einer alternativen Ausgestaltung werden auch andere oder weitere der Fixierelemente 8, 16 mit entsprechenden Federn 19 belastet.

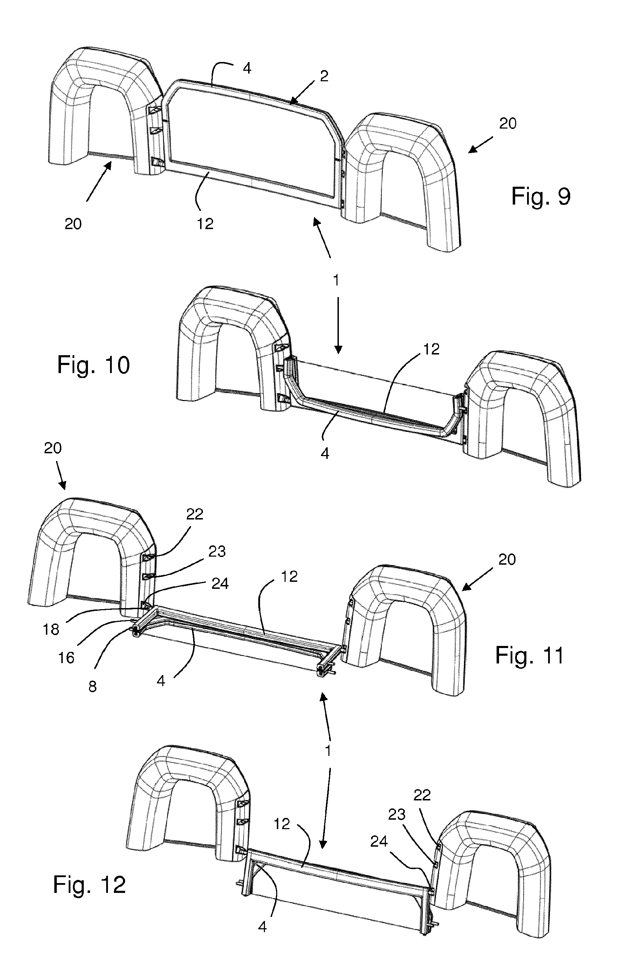

In den Figuren 9-12 ist eine zweite Ausführungsform der Erfindung gezeigt, die sich im Wesentlichen dadurch auszeichnet, dass die Aufnahmen 22, 23, 24 für die Fixierelemente 8, 16, 18 in den beiden Überrollbügeln 20 versenkt angeordnet sind, also optisch unscheinbarer gestaltet sind. Von der Vorderseite aus, also vom Fahrer- und Beifahrersitz aus, sind die Aufnahmen 22, 23, 24 nicht oder nur zum geringen Teil aus zu sehen. Da bei dieser Ausführungsform keine Anbauteile 21 (s. Fig. 3-6) von den Überrollbügeln 20 abstehen, besteht keine Stoßgefahr.

Die Bezugszeichen in den Fig. 9-12 sind die gleichen wie in den Fig. 1-8. Gleiche Bezugszeichen stehen für gleiche oder vergleichbare Teile.

In der Fig. 9 ist die Windschotteinrichtung 1, die - bis auf die leicht abgewandelte Geometrie - analog der Windschotteinrichtung gemäß der Fig. 1-8 ausgebildet ist, im eingebauten und aufgeklappten Zustand dargestellt. Diese Situation entspricht derjenigen der Fig. 3.

In der Fig. 10 ist der Oberrahmen 4 im Wesentlichen um 180° abgeklappt und liegt am Unterrahmen 12 an, der mit seinen Fixierelementen 16 und 18 in den Aufnahmen 23 bzw. 24 gelagert ist. Soll die Windschotteinrichtung 1 in dieser Stellung auch im Fahrbetrieb verwendet werden, können - damit der Oberrahmen 4 während der Fahrt nicht hin und her schwingt - beispielsweise sich gegenüberliegende Magnete an entsprechenden Stellen im Ober- und Unterrahmen 4, 12 angeordnet sein, die den Oberrahmen 4 am Unterrahmen 12 halten.

Die Fig. 11 und 12 zeigen den Unterrahmen 12 nur noch über seine Fixierelemente 18 zwischen den Überrollbügeln 20 gehalten, so dass er um diese Fixierelemente 18 geschwenkt ist. In der Fig. 11 ist der Unterrahmen 12 und mit ihm der Oberrahmen 4 in eine Horizontallage geschwenkt dargestellt, während die Fig. 12 eine ganz nach unten geschwenkte Stellung zeigt. In beiden diesen Fällen kann vorgesehen sein, dass die Windschotteinrichtung 1 in diesen Stellungen fixierbar ist (nicht dargestellt). In der in Fig. 12 dargestellten Stellung ist für den Fahrbetrieb eine Fixierung der Windschotteinrichtung 1 aber nicht unbedingt notwendig. Bei der Stellung gemäß der Fig. 11 kann die Windschotteinrichtung beispielsweise auf einer Ablage abgelegt werden.

Die Erfindung wurde anhand eines Ausführungsbeispiels näher erläutert. Abwandlungen im Rahmen der Ansprüche sind ohne weiteres möglich. So können im Bereich der in den Figuren dargestellten Klappscharniere 10 (die dort als Filmscharniere ausgebildet) sind, Rastelemente angeordnet sein, um den ersten und den zweiten Teilrahmen in der aufgeklappten Stellung miteinander zu verrasten. Hierzu weisen die beiden Teilrahmen miteinander korrespondiere Rastelemente auf, beispielsweise federbelastete Rastnasen einerseits und Hinterschneidungen für die einrastenden Rastnasen andererseits. Bei einer derartigen Ausgestaltung brauchen am ersten Teilrahmen (Oberrahmen) keine Fixierelemente und keine entsprechenden Aufnahmen auf Fahrzeugseite vorgesehen sein, da die Verrastung den ersten mit dem zweiten Teilrahmen auch im Fahreinsatz hinreichend fixiert. Der zweite Erfindungsaspekt ist also bei dieser Ausführungsform nicht realisiert. Auch kann es hierbei vorgesehen sein, dass die Aufnahmen für den unteren Teilrahmen als im Wesentlichen in vertikaler Richtung verlaufende Schienen ausgebildet sind, in welche der untere Teilrahmen von oben eingeführt wird (also kein Schwenken des unteren Teilrahmens bei der Montage vorgesehen ist). Die Schienen enden unterhalb der Klappachse, um welche der erste (obere) Teilrahmen relativ zum zweiten (unteren) Teilrahmen verschwenkbar ist. Die Filmscharniere können bei dieser Ausführungsform ebenfalls vorhanden sein; alternativ sind herkömmliche Gelenkscharniere verwendbar.

Auch ist es denkbar, dass gemäß einer Alternative die Aufnahmen 22, 23, 24 zu verschiedenen Seiten in x-Richtung geöffnet sind, so dass die Klappung von Unter- zu Oberrahmen in entgegengesetzter Richtung realisiert wird im Vergleich zum Verschwenken des Unterrahmens in den unteren Aufnahmen. Außerdem können zumindest die Aufnahmen 22, 23 (oder auch nur eine von diesen) anstelle von Sacköffnungen als durchgehende Öffnungen ausgebildet sein. Hier muss dann gewährleistet sein, dass der Fahrtwind die Fixierelemente 8, 16 nicht aus den beidseitig in x-Richtungen geöffneten Aufnahmen 22, 23 herausdrückt.

### Bezugszeichenliste

- 1: Windschotteinrichtung
- 2: Rahmen
- 3: Flachmaterialbahn
- 4: erster Teilrahmen
- 5: Querabschnitt
- 6: Eckabschnitt
- 7: Längsabschnitt
- 8: Fixierelemente (des ersten Teilrahmens)
- 10: Klappscharnier (hier: Filmscharnier)
- 10a: Nylonband
- 11: Klappachse
- 12: zweiter Teilrahmen
- 13: Querabschnitt
- 14: Eckabschnitt
- 14a: Hohlraum
- 15: Längsabschnitt
- 16: mittlere Fixierelemente (am zweiten Teilrahmen)
- 18: untere Fixierelemente (am zweiten Teilrahmen)
- 19: Feder des Fixierelementes
- 20: Überrollbügel
- 21: Anbauteil
- 22: Aufnahme (für Fixierelement des ersten Teilrahmens)
- 23: Aufnahme (für oberes Fixierelement des zweiten Teilrahmens)
- 24: Aufnahme (für unteres Fixierelement des zweiten Teilrahmens)
- 27: Gegendruckbolzen
- 28: Feder des Gegendruckbolzens

## Patentansprüche

1. Windschotteinrichtung (1) für ein Cabriolet, vorzugsweise zur Montage zwischen zwei benachbarten Kopfstützen oder Überrollbügeln (20), mit einem Rahmen (2), in dem eine Flachmaterialbahn (3) eingespannt ist, wobei der Rahmen (2) mindestens einen U-förmigen ersten Teilrahmen (4) und einen U-förmigen zweiten Teilrahmen (12) aufweist, die an ihren freien Enden über eine Klappachse (11) miteinander verbunden sind, um welche der erste und der zweite Teilrahmen (4, 12) relativ zueinander verschwenkbar sind, und mit Fixierelementen (8, 16, 18) an dem Rahmen (2), die mit Aufnahmen (22-24) am Fahrzeug zusammenwirken, um die Windschotteinrichtung (1) im Fahrzeug reversibel lösbar zu fixieren, **dadurch gekennzeichnet, dass** der erste Teilrahmen (4) um die besagte Klappachse (11) schwenkbar ausgebildet ist, während der zweite Teilrahmen (12) durch zumindest ein Fixierelement (8, 16, 18) im Fahrzeug fixiert verbleibt, vorzugsweise in seiner Einbauposition im Fahrzeug fixiert verbleibt.

2. Windschotteinrichtung für ein Cabriolet, vorzugsweise zur Montage zwischen zwei benachbarten Kopfstützen oder Überrollbügeln (20), insbesondere nach dem Oberbegriff des Anspruchs 1 und vorzugsweise mit allen Merkmalen des Anspruchs 1, mit einem Rahmen (2), in dem eine Flachmaterialbahn (3) eingespannt ist, wobei der Rahmen (3) mindestens einen U-förmigen ersten Teilrahmen (4) und einen U-förmigen zweiten Teilrahmen (12) aufweist, die an ihren freien Enden über eine Klappachse (11) miteinander verbunden sind, um welche der erste und der zweite Teilrahmen (4, 12) relativ zueinander verschwenkbar sind, und mit Fixierelementen (8, 16, 18) an dem Rahmen (2), die mit Aufnahmen (22-24) am Fahrzeug zusammenwirken, um die Windschotteinrichtung (1) im Fahrzeug reversibel lösbar zu fixieren, **dadurch gekennzeichnet, dass** die Fixierelemente (8, 16, 18) an den Rahmen-Längsabschnitten (7, 15), die sich bei eingebauter Windschotteinrichtung (1) in Fahrzeugquerrichtung (y-Richtung) gegenüberliegen, nach außen ragen und mit den Aufnahmen (22-24) reversibel lösbar koppelbar sind, wobei der aufgeklappte und im Fahrzeug eingebaute Rahmen (2) erst durch die Lagerung in den Aufnahmen (22-24) eine Steifigkeit erhält, die im üblichen Fahrbetrieb des Fahrzeugs dem Fahrtwind standzuhalten vermag.

3. Windschotteinrichtung nach einem der vorhergehenden Ansprüche, **dadurch gekennzeichnet, dass** der Rahmen (2) als zwischen zwei Kopfstützen oder Überrollbügeln (20) einbaubarer Windschottrahmen (2) ausgebildet ist, und dass der erste Teilrahmen (4) als oberer Rahmen (im Folgenden Oberrahmen (4) genannt) und der zweite Teilrahmen (12) als unterer Rahmen (im Folgenden Unterrahmen (12) genannt) ausgebildet ist, wobei der Oberrahmen (4) bei im Fahrzeug eingebautem Windschottrahmen (2) um die besagte Klappachse (11) schwenkbar ist, während der Unterrahmen (12) im Fahrzeug verbleibt, insbesondere in seiner aufrechten Einbauposition im Fahrzeug verbleibt.

4. Windschotteinrichtung nach einem der vorhergehenden Ansprüche, **dadurch gekennzeichnet, dass** die Fixierelemente (8, 16, 18) als Stifte ausgebildet sind, die vorzugsweise diametral von den Längsabschnitten (7, 15) des ersten und/oder des zweiten Teilrahmens (4, 12) abstehen, und dass die besagten Aufnahmen (22-24) in den beiden Überrollbügeln (20), Kopfstützen o.ä. oder in einer Verkleidung der Überrollbügel (20), Kopfstützen o.ä. ausgebildet sind.

5. Windschotteinrichtung nach einem der vorhergehenden Ansprüche, **dadurch gekennzeichnet, dass** an den beiden Längsabschnitten (15) des zweiten Teilrahmens (12) jeweils mindestens zwei Fixierelemente (16, 18) angeordnet sind, die allesamt beim Abklappen des ersten Teilrahmens (4) in ihren zugeordneten Aufnahmen (23, 24) verbleiben.

6. Windschotteinrichtung nach einem der vorhergehenden Ansprüche, **dadurch gekennzeichnet, dass** mindestens ein Fixierelement (8, 16, 18) in einem Eckabschnitt (14) oder an dem Querabschnitt (13) des zweiten Teilrahmens (12) vorgesehen ist, das mit mindestens einer Aufnahme (22, 23, 24) in dem Fahrzeug zusammenwirkt, welche zwischen den beiden Sitzen oder Überrollbügeln (20) angeordnet ist.

7. Windschotteinrichtung nach einem der Ansprüche 1-6, **dadurch gekennzeichnet, dass** die beiden aneinander an- oder gegenüberliegenden freien Enden der beiden Teilrahmen (4, 12) zueinander fixierbar, insbesondere miteinander verrastbar, sind, wobei vorzugsweise an einem der beiden Teilrahmen (4, 12), insbesondere an dem ersten Teilrahmen (4), keine Fixierelemente (8, 16, 18) vorgesehen sind.

8. Windschotteinrichtung nach einem der vorhergehenden Ansprüche, **dadurch gekennzeichnet, dass** der erste Teilrahmen (4) beim Abklappen an den zweiten Teilrahmen (12) in eine Arretierstellung, vorzugsweise eine Raststellung, überführt wird.

9. Windschotteinrichtung nach einem der vorhergehenden Ansprüche, **dadurch gekennzeichnet, dass** mindestens eines der Fixierelemente (8, 16, 18), vorzugsweise mindestens eines der beiden untersten Fixierelemente (18), in y-Richtung durch mindestens eine Feder (19) belastet ist zur y-Zentrierung des Windschottrahmens (2) und/oder zum Toleranzausgleich, wobei die mindestens eine Feder (19) vorzugsweise im Eckabschnitt (14) oder im Querabschnitt (13) des zweiten Teilrahmens (12) bzw. des Unterrahmens angeordnet ist.

10. Vorrichtung integriert in oder angebaut an einen Überrollbügel (20), eine Kopfstütze o.ä. eines Cabriolets, oder für einen Überrollbügel (20), eine Kopfstütze o.ä., insbesondere eine Verkleidung für einen Überrollbügel (20), eine Kopfstütze o.ä., **gekennzeichnet durch** wenigstens eine Aufnahme (22-24) für die Fixierelemente (8, 16, 18) einer Windschotteinrichtung (1) nach einem der vorhergehenden Ansprüche, wobei vorzugsweise mehrere, besonders bevorzugt drei, Aufnahmen (22-24) im Wesentlichen übereinander angeordnet sind.

11. Vorrichtung nach Anspruch 10, **dadurch gekennzeichnet, dass** Aufnahmen (22-24), vorzugsweise die beiden untersten Aufnahmen (24), als schräg nach unten in x- und z-Richtung verlaufende Einschuhnuten ausgebildet sind, und dass weitere Aufnahmen (22-24), insbesondere die über den beiden untersten Aufnahmen (24) angeordneten Aufnahmen (23, 22), im Wesentlichen horizontal verlaufende Sacköffnungen aufweisen.

12. Vorrichtung nach einem der Ansprüche 10 - 11, **dadurch gekennzeichnet, dass** die Aufnahmen (22-24) in x-Richtung in verschiedene Richtungen geöffnet sind.

13. Vorrichtung nach einem der Ansprüche 10 - 12, **dadurch gekennzeichnet, dass** die Aufnahmen (22, 23) derart ausgebildet sind, dass die Fixierelemente (6) des ersten Teilrahmens (4) bzw. des Oberrahmens mit weniger Kraft aus ihren Aufnahmen (22) zieh- oder drückbar sind als die obersten Fixierelemente (16) aus ihren entsprechenden Aufnahmen (23) des zweiten Teilrahmens (12) bzw. des Unterrahmens.

14. Vorrichtung nach einem der Ansprüche 10 - 13, **dadurch gekennzeichnet, dass** lediglich Aufnahmen (23, 24) für Fixierelemente (16, 18) des zweiten Teilrahmens (12) vorgesehen sind.

15. Vorrichtung nach einem der Ansprüche 10 - 14, **dadurch gekennzeichnet, dass** zumindest einige der Aufnahmen (24) federbelastete Gegendruckbolzen (27) aufweisen, um durch Federkraft die entsprechenden Fixierelemente (8, 16) des Oberrahmens (4) und/oder des Unterrahmens (12) zu fixieren, wobei vorzugsweise die Rückhaltekraft durch die Federbelastung für die Fixierelemente (6) des Oberrahmens (4) kleiner ist als die Rückhaltekraft durch die Federbelastung für die Fixierelemente (16) des Unterrahmens (12).
